# EUROPEAN PATENT SPECIFICATION

(11) **EP 1 915 940 B1**
(45) Date of publication and mention of the grant of the patent: **02.03.2011**
(21) Application number: 05792166.0
(22) Date of filing: 26.09.2005
(51) Int. Cl.: A47L 9/16, B01D 45/16, B04C 3/04

(54) **A DUST REMOVING APPLIANCE OF A PARALLEL TYPE CLEANER**
STAUBENTFERNUNGSVORRICHTUNG EINER PARALLELARTIGEN REINIGUNGSVORRICHTUNG
DISPOSITIF DE DEPOUSSIERAGE D UN APPAREIL DE NETTOYAGE DE TYPE PARALLELE

(30) Priority: 19.08.2005 CN 200510041555
(43) Date of publication of application: 30.04.2008
(73) Proprietor: Suzhou Kingclean Floorcare Co., Ltd., Jiangsu 215009 (CN)
(72) Inventor: NI, Zugen, Jiangsu 215009 (CN)
(74) Representative: Fink, Stefan D.
(86) International application number: PCT/CN2005/001577
(87) International publication number: WO 2007/019740

(56) References cited:
- CN-A- 1 312 049
- CN-A- 1 377 627
- CN-Y- 2 152 593
- GB-A- 2 326 360
- JP-A- 2004 135 700
- US-A- 4 373 228
- US-A1- 2001 054 213
- US-A1- 2003 200 736
- US-A1- 2004 040 270

## Description

### Field of Invention

The present invention relates to a dust removing appliance of a parallel type cleaner.

### Background of the Invention

One traditional dust cleaner is arranged with a filter device for filtering suctioned dust-laden air, and leaving dust particles in a dust collecting device. Therefore the filter device should be cleaned or replaced after used for period of time, otherwise, fine dust may clog filter holes of the filter device, which will increase resistance of the dedust motor, even bum the motor out, thereby not only bringing trouble for users, but also adversely affecting performance and life-span of the dust cleaner.

In recent years, a cyclone dedusting device is used to replace the filter device by manufactures according to principle of cyclone separation, which has a better dedusting effect and is widely used in dust cleaners. A conical barrel with a large upper end and a relative small lower end is mounted in the tank of the cyclone dedusting device, and a wind outlet tube is disposed in a longitudinal direction at the upper end of the conical barrel, the lower end of the conical barrel is opened so as to allow dust to drop into the bottom of the tank, a wind inlet tube is entered into the side wall of an upper portion of the frustoconical along a tangent direction, so that the dust-laden air produces cyclone in the frustoconical, and the dust particle fall into a bottom of a dust collecting barrel along the sidewall of the frustoconical by centrifugal force. And the dedusted air flows upward, expelled out through the wind outlet tube.

Besides, the cyclone barrel of the dedusting device described above is in a reversed conical shape with a larger upper end and a smaller lower end and separates dust by accelerated rotation of air flow. As a result, air flow pressure loss is relatively high, which adversely affects dust suction effect of dedust cleaner. Furthermore, the accelerated air flow may easily raise again the fine dust which has fallen to the bottom of the dust tank, and the raised fine dust will be expelled out from the wind outlet tube with the air flow, thereby resulting in secondary pollution. So the device is more suitable for separating coarse particles and is less effective in separating fine particles.

Meanwhile, the cyclone dedusting device described above has a relatively larger bulk, and an especially larger bulk is required while it is used in a large dedust cleaner requiring a relative larger air flow, which not only increases manufacturing cost thereof, but also brings much inconvenience to users.

JP-A-2004135700 discloses a dust removing appliance of a parallel type cleaner. The appliance includes at least two parallel-arranged cyclonic separators, wherein two cyclonic inlet openings are located side by side and connected to a same wind inlet tube.

GB 2 326 360 A describes a cyclonic separating apparatus comprising an outer wall and an inner wall and a fluid inlet arranged to introduce fluid into the interior of the outer wall tangentially thereto, wherein the spacing between the outer wall and the inner wall is enlarged immediately downstream of the fluid inlet. This enlargement can be created by a flat in the inner wall immediately downstream of the inlet. Alternatively, the outer wall may be deformed outwardly, or the inner wall deformed inwardly or the inner wall mounted eccentrically with respect to the outer wall to provide the enlargement. All of these arrangements maintain the cross-sectional area of the airflow path downstream of the inlet so as to reduce the possibility of blockage. The apparatus finds particular use in domestic vacuum cleaners.

### Brief Summary of the Invention

The object of the present invention is to provide a dust removing appliance of a parallel type cleaner, wherein, as air blow is increased, the volume of the machine can be reduced, while the efficiency of the dust removing is maintained higher.

In one technical solution of the present invention, a dust removing appliance of a parallel type cleaner is provided, the appliance includes at least two parallel-arranged upstream cyclonic separators, wherein two cyclonic inlet openings are located side by side and connected to a same wind inlet tube. A downstream cyclonic separator is inserted in each upstream cyclonic separator, each upstream cyclonic separator comprises a cylindrical filter with dense pores thereon and a cyclonic inlet opening by which the airflow is guided at a tangent into the cylindrical filter.

In a detailed technical solution of the present invention, a dust removing appliance of a parallel type cleaner is provided, the appliance includes at least two parallel-arranged upstream cyclonic separators, wherein, a downstream cyclonic separator is inserted in each upstream cyclonic separator, each upstream cyclonic separator comprises a cylindrical tank in a coaxial fashion.

In a further detailed technical solution of the present invention, a dust removing appliance of a parallel type cleaner is provided, the appliance includes at least two parallel-arranged upstream cyclonic separators, wherein, a downstream cyclonic separator is inserted in each upstream cyclonic separator. Each upstream cyclonic separator comprises a cylindrical tank with a cyclonic inlet opening, a cylindrical filter with dense pores thereon is in the cylindrical tank in a coaxial fashion.

The two tanks are parallel-arranged and the two cyclonic inlet openings are arranged side by side in communication with a same wind inlet tube. The downstream cyclonic separator includes a conical barrel and a cylindrical barrel with a cyclonic inlet opening, the cylindrical barrel is connected to the small end of the conical barrel, and a wind outlet tube is mounted in the cylindrical barrel in a coaxial fashion.

The conical barrel is inserted into the cylindrical filter. A portion of the cylindrical barrel is left outside the cylindrical filter and extends up into the gibbose cover with its cyclonic inlet opening. And the upside of the wind outlet tube is in communication with a wind outlet opening of the gibbose cover which connected hermetically with the upper opening of the tank and the inside of it is in communication with the upper opening of the cylindrical filter. An umbrella reflecting plate provided with a refluence hole in the center is mounted to the lower portion of the conical barrel, a ring gap for dropping-dust is defined between the peripheral of the umbrella reflecting plate and the sidewall of the conical barrel. The bottom of the conical barrel is connected to a dust collecting barrel.

The advantages of the present invention are as follows:
1. The invention includes at least two parallel-arranged upstream cyclonic separators, wherein, a downstream cyclonic separator is inserted in each upstream cyclonic separator. As air blow is increased, the volume of the machine can be reduced, while the efficiency of the dust removing is maintained higher.
2. The downstream cyclonic separator of the present invention is applied with a structure of diffusing type, the conical barrel of which has a configuration with a small top end and a large bottom end, the cyclonic inlet opening is located at the small top end, so that airflow is in a decelerating and centrifugal state when it rotates within the cylindrical barrel, thus the loss on the airflow pressure is smaller.
3. The rotation speed of airflow in the lower portion of downstream cyclonic separator of the present invention is slower than that in the upper portion thereof, preventing dust on the bottom of the dust tank from being raised again, thereby no secondary pollution generated.

### Brief Description of the Drawings

The present invention will be further described below in conjunction with the drawings and the embodiments:
Fig. 1 is an exploded schematic view of the present invention;
Fig. 2 is a front cross-sectional view of the present invention; and
Fig. 3 is a solid view of the present invention showing the exterior configuration thereof.

In the drawings: 1 upstream cyclonic separator; 2 downstream cyclonic separator; 3 cyclonic inlet opening; 4 tank; 5 cylindrical filter; 6 conical barrel; 7 cyclonic inlet opening; 8 cylindrical barrel; 9 wind outlet tube; 10 gibbose cover; 11 wind outlet opening; 12 umbrella reflecting plate; 13 refluence hole; 14 ring gap; 15 dust collecting barrel.

### Description of the Preferred Embodiments

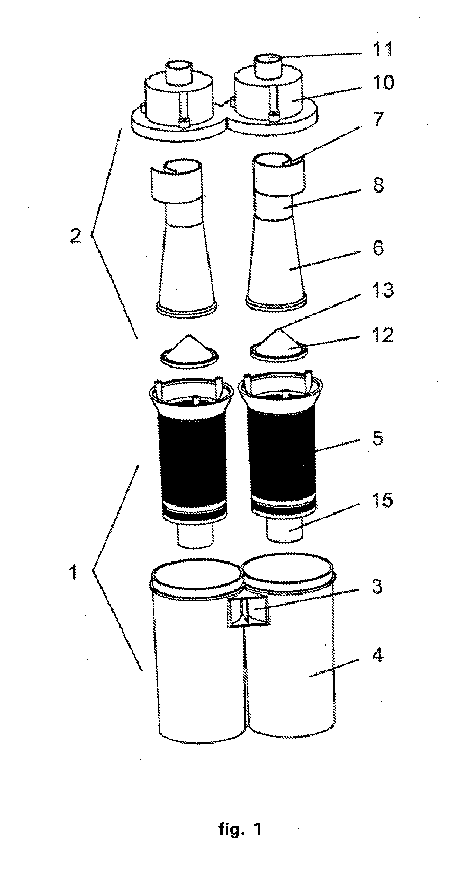

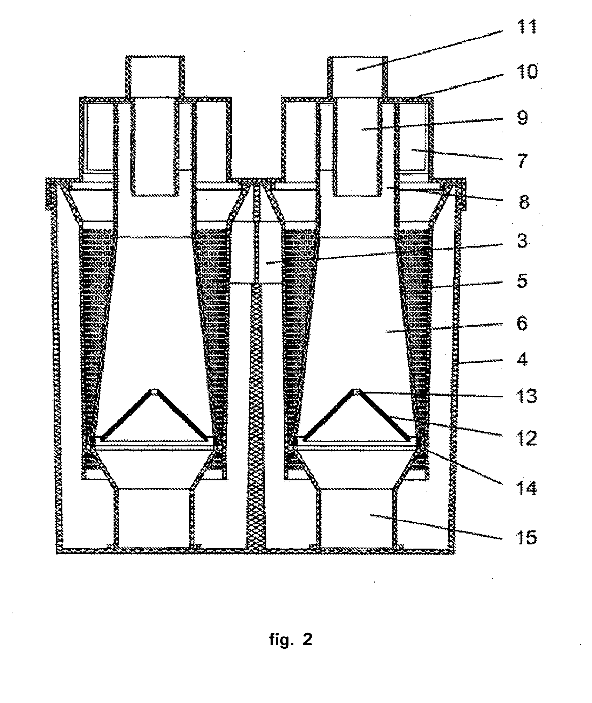

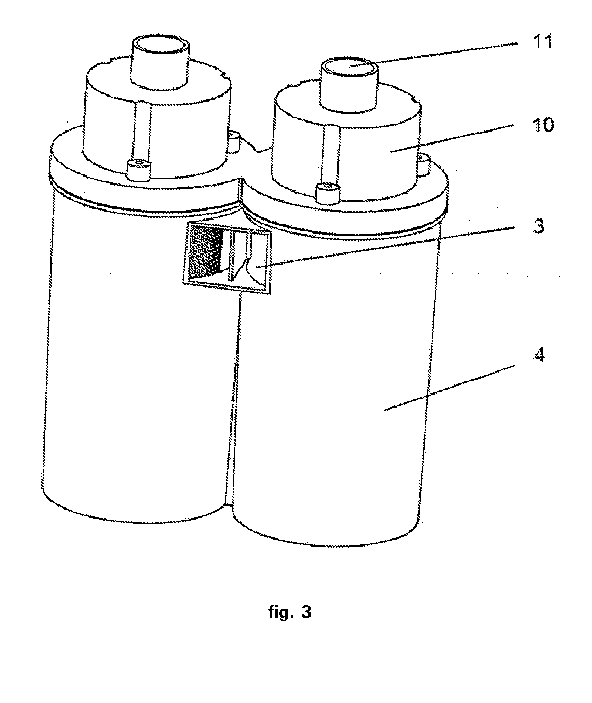

Referring to Figs. 1, 2, and 3, a dust removing appliance of a parallel type cleaner is provided, the appliance includes at least two parallel-arranged upstream cyclonic separators 1, each upstream cyclonic separator 1 comprises a cylindrical tank 4 with a cyclonic inlet opening 3, a cylindrical filter 5 with pores thereon is arranged in the cylindrical tank 4 in a coaxial fashion. The two cylindrical tanks 4 are connected and fixed to each other and the two cyclonic inlet openings 3 are arranged side by side in communication with one wind inlet tube.

The downstream cyclonic separator 2 is inserted in each upstream cyclonic separator 1 and it comprises a conical barrel 6 and a cylindrical barrel 8 with a cyclonic inlet opening 7, the cylindrical barrel 8 is connected to the small end of the conical barrel 6. A wind outlet tube (9) is mounted in the cylindrical barrel in a coaxial fashion.

The conical barrel 6 is inserted into the cylindrical filter 5. A portion of the cylindrical barrel 8 is left outside the cylindrical filter 5 and extends up into the gibbose cover 10 with its cyclonic inlet opening 7. And the upside of the wind outlet tube 9 is in communication with a wind outlet opening 11 of the gibbose cover 10 which connected hermetically with the upper opening of the tank 4 and the inside of it is in communication with the upper opening of the cylindrical filter 5.

An umbrella reflecting plate 12 with a refluence hole 13 in the center is mounted to the lower portion of the conical barrel 6, a ring gap 14 for dropping-dust is defined between the peripheral of the umbrella reflecting plate 12 and a side wall of the conical barrel 6. The bottom of the conical barrel 6 is connected to a dust collecting barrel 15.

During operation, the dust-laden air enters the tank 4 via cyclonic inlet 3. The coarse dust drops down into the tank 4 when pass the cylindrical filter 5, while the air with fine dust will go on moving into the cylindrical filter 5, entering the cylindrical barrel 8 via two cyclonic inlet openings 7, and then form cyclone. During cyclone, fine dust drops along an inner wall of the conical barrel 6, and enters into the bottom of the dust collecting barrel 15 via the ring gap 14, and the clean air goes upwards through the wind outlet tube 9 and at last exhausted out by wind outlet opening 11.

## Claims

1. A dust removing appliance of a parallel type cleaner including: at least two parallel-arranged cyclonic separators (1), wherein two cyclonic inlet openings (3) are located side by side and connected to a same wind inlet tube, **characterized in that** a downstream cyclonic separator (2) is inserted in each upstream cyclonic separator (1), each upstream cyclonic separator (1) comprises a cylindrical filter (5) with dense pores thereon and a cyclonic inlet opening (3) by which the airflow is guided at a tangent into the cylindrical filter (5).

2. The appliance as claimed in claim 1, **characterized in that** the downstream cyclonic separator (2) includes a frustoconical (6) and a cylindrical barrel (8) with a cyclonic inlet opening (7), the cylindrical barrel (8) is connected to the small end of the frustoconical (6), and a wind outlet tube (9) is mounted in the cylindrical barrel (8) in a coaxial fashion.

3. The appliance as claimed in claim 2, **characterized in that** the longitudinal length of the frustoconical (6) is shorter than that of the cylindrical filter (5).

4. The appliance as claimed in claim 2, **characterized in that** the frustoconical (6) is removably mounted to the cylindrical filter (5).

5. The appliance as claimed in claim 4, **characterized in that** the bottom of the frustoconical (6) fits the inner wall of the cylindrical filter (5).

6. The appliance as claimed in claim 2-5, **characterized in that** the frustoconical (6) is inserted into the cylindrical filter (5), a portion of the cylindrical barrel (8) is left outside the cylindrical filter (5) and extends upward into the gibbose cover (10) with its cyclonic inlet opening (7), and the upside of the wind outlet tube (9) is in communication with a wind outlet opening (11) of the gibbose cover (10) which connected hermetically with the upper opening of a cylindrical tank (4) and the inside of the gibbose cover (10) is in communication with the upper opening of the cylindrical filter (5).

7. The appliance as claimed in claim 6, **characterized in that** an umbrella reflecting plate (12) provided with a refluence hole (13) in the center is mounted to the lower portion of the frustoconical (6), a ring gap (14) for dropping-dust is defined between the peripheral of the umbrella reflecting plate (12) and the side wall of the frustoconical (6), the bottom of the frustoconical (6) is connected to a dust collecting barrel (15).

## Patentansprüche

1. Vorrichtung zum Entfernen von Staub in Gestalt eines Reinigers vom parallelen Typ, umfassend: zumindest zwei parallel angeordnete zyklonale Separatoren (1), wobei zwei zyklonale Einlassöffnungen (3) nebeneinander angeordnet sind und an die gleiche Windeinlassröhre angeschlossen sind, **dadurch gekennzeichnet, dass** ein nachgeschalteter zyklonaler Separator (2) eingefügt ist in jeden vorgeschalteten zyklonalen Separator (1), wobei jeder vorgeschaltete zyklonale Separator (1) einen zylindrischen Filter mit dichten Poren daran und eine zyklonale Einlassöffnung (3) aufweist, durch welche der Luftstrom entlang einer Tangente in den zylindrischen Filter (5) hinein geführt ist.

2. Vorrichtung nach Anspruch 1, **dadurch gekennzeichnet, dass** der nachgeschaltete Zyklonseparator (2) ein kegelstumpfförmiges (6) und ein zylindrisches Gehäuse (8) mit einer zyklonalen Einlassöffnung (7) umfasst, wobei das zylindrische Gehäuse (8) mit dem schmalen Ende des kegelstumpfförmigen Gehäuses (6) verbunden ist, und wobei eine Windauslassröhre (9) in das zylindrische Gehäuse (8) in einer koaxialen Weise montiert ist.

3. Vorrichtung nach Anspruch 2, **dadurch gekennzeichnet, dass** die longitudinale Länge des kegelstumpfförmigen Gehäuses (6) kürzer ist als die des zylindrischen Filters (5).

4. Vorrichtung nach Anspruch 2, **dadurch gekennzeichnet, dass** das kegelstumpfförmige Gehäuse (6) entfernbar an dem zylindrischen Filter (5) befestigt ist.

5. Vorrichtung nach Anspruch 4, **dadurch gekennzeichnet, dass** der Boden des kegelstumpfförmigen Gehäuses (6) sich an die Innenwand des zylindrischen Filters (5) anpasst.

6. Vorrichtung nach einem der Ansprüche 2 bis 5, **dadurch gekennzeichnet, dass** das kegelsturumpfförmige Gehäuse (6) in den zylindrischen Filter (5) eingeführt ist, wobei ein Abschnitt des zylindrischen Gehäuses (8) außerhalb des zylindrischen Filters (5) belassen ist und sich nach oben in die Gibbose-Abdeckung (10) mit seiner zyklonalen Einlassöffnung (7) erstreckt, und wobei die Oberseite der Windauslassröhre (9) in Kommunikation mit einer Windauslassöffnung (11) der Gibbose-Abdeckung (10) ist, welche mit der oberen Öffnung eines zylindrischen Behälters (4) hermetisch verbunden ist und wobei das Innere der Gibbose-Abdeckung (10) in Kommunikation mit der oberen Öffnung des zylindrischen Filters (5) ist.

7. Vorrichtung nach Anspruch 6, **dadurch gekennzeichnet, dass** eine schirmförmige Reflektorplatte (12), welche mit einer zentralen Refluenz-Öffnung (13) versehen ist, an einem unteren Abschnitt des kegelstumpfförmigen Gehäuses (6) befestigt ist, wobei ein Ringspalt (14) für fallenden Staub definiert ist zwischen der Peripherie der schirmartigen Reflektionsplatte (12) und der Seitenwand des kegelstumpfförmigen Gehäuses (6), wobei die Unterseite des kegelstumpfförmigen Gehäuses (6) mit einem Staubsammelbehälter (15) verbunden ist.

## Revendications

1. Appareil d'enlèvement de poussière d'un dispositif de nettoyage du type parallèle incluant : au moins deux séparateurs cycloniques (1) agencés en parallèle, dans lequel deux ouvertures d'entrée cycloniques (3) sont situées côte à côte et connectées à un même tube d'entrée d'air, **caractérisé en ce qu'**un séparateur cyclonique aval (2) est inséré dans chaque séparateur cyclonique amont (1), chaque séparateur cyclonique amont (1) comprend un filtre cylindrique (5) avec des pores denses dessus et une ouverture d'entrée cyclonique (3) par laquelle le flux d'air est guidé tangentiellement dans le filtre cylindrique (5).

2. Appareil selon la revendication 1, **caractérisé en ce que** le séparateur cyclonique aval (2) inclut un tronc de cône (6) et un corps cylindrique (8) avec une ouverture d'entrée cyclonique (7), le corps cylindrique (8) est connecté à la petite extrémité du tronc de cône (6), et un tube de sortie d'air (9) est monté dans le baril cylindrique (8) de manière coaxiale.

3. Appareil selon la revendication 2, **caractérisé en ce que** la longueur longitudinale du tronc de cône (6) est plus courte que celle du filtre cylindrique (5).

4. Appareil selon la revendication 2, **caractérisé en ce que** le tronc de cône (6) est monté de manière amovible sur le filtre cylindrique (5).

5. Appareil selon la revendication 4, **caractérisé en ce que** le fond du tronc de cône (6) s'ajuste sur la paroi intérieure du filtre cylindrique (5).

6. Appareil selon la revendication 2-5, **caractérisé en ce que** le tronc de cône (6) est inséré dans le filtre cylindrique (5), une partie du corps cylindrique (8) est laissée à l'extérieur du filtre cylindrique (5) et s'étend vers le haut dans le couvercle gibbeux (10) avec son ouverture d'entrée cyclonique (7), et le côté haut du tube de sortie d'air (9) est en communication avec une ouverture de sortie d'air (11) du couvercle gibbeux (10) qui est connecté hermétiquement avec l'ouverture supérieure d'un réservoir cylindrique (4) et l'intérieur du couvercle gibbeux (10) est en communication avec l'ouverture supérieure du filtre cylindrique (5).

7. Appareil selon la revendication 6, **caractérisé en ce qu'**une plaque réfléchissante conique (12) pourvue d'un trou de reflux (13) dans le centre est montée sur la partie inférieure du tronc de cône (6), un espace annulaire (14) pour laisser tomber la poussière est défini entre la périphérie de la plaque réfléchissante conique (12) et la paroi latérale du tronc de cône (6), le fond du tronc de cône (6) est connecté à un corps de collecte de poussière (15).
